# EUROPEAN PATENT APPLICATION

(11) **EP 3 763 476 A1**
(43) Date of publication of application: **13.01.2021**
(21) Application number: 20194567.2
(22) Date of filing: 22.12.2016
(51) Int. Cl.: B23K 35/30, B23K 35/02, C22C 38/42, C22C 38/44, C22C 38/46, C22C 38/48, C22C 38/52, C22C 38/02, C22C 38/04, C22C 38/06, C22C 38/00, C21D 6/00, C21D 9/50, C21D 1/18

(54) **A WELDING CONSUMABLE, A METHOD OF WELDING AND A WELDED PRODUCT**

(30) Priority: 23.12.2015 GB 201522777; 08.04.2016 GB 201606014; 16.09.2016 GB 201615834
(62) Divisional of application: 16822250.3
(71) Applicant: Goodwin Plc, Hanley Stoke-on-Trent ST1 3NR (GB)
(72) Inventor: GOODWIN, Richard Stanley, Croxton, Staffordshire ST21 6PG (GB); GOODWIN, Bernard Rafe Ernest, Market Drayton, Shropshire TF9 2AB (GB); ROBERTS, Stephen, Stone, Staffordshire ST15 8YH (GB); BIRKS, Steven Charles, Stoke-On-Trent, ST6 8PF (GB)
(74) Representative: J A Kemp LLP

(57) **Abstract**

A steel including, in mass %: 0.005 to 0.015% carbon; 0.05 to 0.35% silicon, 7.45 to 8.4% nickel; 1.00% or less manganese; 0.025% or less sulphur; 0.030% or less phosphorous; 24.0 to 26.0% chromium; 0.50 to 1.00% copper; 3.0 to 4.0% molybdenum; 0.002 to 0.010% niobium; 0.75% or less cobalt; 0.015% or less aluminium; 0.20 to 0.30% nitrogen; 0.50 to 0.85% tungsten; the balance being iron and incidental impurities.

## Description

The present invention relates to a steel, a welding consumable, a cast, forged or wrought product, a method of welding, a welded product and a method of heat treating. In particular the invention relates to steels such as those falling under the designation ASTM A995-13 Gr 6A, 1 December 2013 and to a welding consumable suitable for welding such steels and similar steels as well as a heat treatment suitable for such steels whether welded or not.

ASTM A995-13 Gr 6A, 1 December 2013 (6A) is a 25 % Chrome Super Duplex stainless steel (comprising mainly ferrite and austenite). Such Super Duplex steels have been made for over 40 years. Super Duplex stainless steels are extensively used where higher strength and corrosion resistance is required as compared to conventional 18/8/3 stainless steels such as 316 or the cast version ASTM A351 CF8M.

Traditionally CF8M has been and still is used for cryogenic applications such as liquefied natural gas (LNG) facilities. This is because CF8M provides good impact properties down to -196 Degrees C even in thick wall sections whereas Super Duplex stainless steel such as ASTM A995-13 6A, 1 December 2013 traditionally only has reasonable impact properties down to -46 degrees C and even then not at ½ thickness (T1/2) in very thick wall components where the wall thickness is 200mm or even 250mm and larger.

It is for this reason that the Norsok specification M630 for grade 6A only requires impact testing to be carried out at -46 Degrees C and for the following condition to be met for production castings.
Norsok M630 material data sheet MDS-D56: 45J average / 35J single minimum at -46° ¼ thickness (T1/4)

Norsok write many material specifications having researched globally what is best practice and what is achievable from high quality manufacturers. The Norsok specifications are used by many metallurgists and engineering designers, especially in the oil and gas industry, as an authoritative guide as to what metallurgical properties are possible to achieve in different alloys.

Many 25 % Cr Super Duplex stainless steel castings have been made for over 40 years. However, it has not been possible to guarantee higher impact properties at -46 degrees C than that which is specified in the Norsok Specification and even then not in thick walled components (e.g. with a thickness of over 150 mm or over 200mm or over 250mm).

The present invention relates to a specific chemistry for a ASTM A995-13 Gr 6A, 1 December 2013 type Super Duplex alloy that consistently provides superior impact properties up to 150 % higher than the Norsok specification at - 46 Degrees C and also provides acceptable impact properties (45J Av / 35J Min) at - 101 Degrees C.

The ASTM A488 weld qualification standard does not call up deep impact testing (that is through the depth of the weld) and nearly all impact testing of weld metal is normally carried out near the weld cap rather than the weld root.

It is for this reason that there is little knowledge of impact properties in thick Duplex welds. Data generated by an extensive programme of testing using commercially available Duplex welding wire or electrodes have shown that the impact properties of Weld metal at -46 Deg C in post weld solution treated castings severely decrease the further the tests progress down from the weld cap . At between 50mm and 100mm deep the impact properties are unacceptable as they are often in the single figures.

The adoption of the same or similar chemistry restrictions as determined in the inventive steel when applied to welding electrodes for 25% Cr Super Duplex alloy also provides greatly enhanced impact properties in weld metal deeper down from the weld cap than 25mm.

The present invention provides a steel including or consisting of, in mass %: 0.005 to 0.015% carbon; 0.05 to 0.35% silicon, 7.45 to 8.4% nickel; 1.00% or less manganese; 0.025% or less sulphur; 0.030% or less phosphorous; 24.0 to 26.0% chromium; 0.50 to 1.00% copper; 3.0 to 4.0% molybdenum; 0.75% or less cobalt; 0.010% or less niobium;0.015% or less aluminium; 0.20 to 0.30% nitrogen and 0.50 to 0.85% tungsten; the balance being iron and incidental impurities.

The adoption of the specific chemistry of the present invention controls on C, Si, Ni, Nb, and W (to minimise the presence of sigma phase) of the present invention result in the following:
1) Impact properties in ASTM A995-13 6A, 1 December 2013 that achieve up to and beyond 140J average / 100J single minimum at -46°C at both ¼ and ½ T in 200mm thick sections and that still achieve the required Yield, UTS, elongation and corrosion properties as specified in the ASTM specification
2) Impact properties at -101 Deg C in ASTM A995-13 6A, 1 December 2013 in 200mm thick sections that consistently achieve 45J Av and 35 J Minimum.
   This level of mechanical performance and safety margin has historically never been achievable with thick section castings on a consistent basis.
3) If the same or similar chemistry limitations that are tighter than the ASTM specification is applied to a welding consumable (e.g. filler weld metal and welding electrodes) then impact properties in 100mm deep weld in 200mm thick Super Duplex stainless steel such as ASTM A995 6A will, in the post weld heat treated (solution treated and water quenched) or in the as-welded condition provide impact properties of up to 100J average / 80J single at - 46°C throughout the weld section thickness.

The present invention therefore provides a welding consumable including or consisting of, in mass %: 0.015 % or less carbon; 0.05 to 0.35% silicon, 7.45 to 10.5% nickel; 2.00% or less manganese; 0.025% or less sulphur; 0.030% or less phosphorous; 24.0 to 27.0% chromium; 0.00 to 1.00% copper; 3.0 to 4.5% molybdenum; 0.75% or less cobalt; 0.010% or less niobium; 0.015% or less aluminium; 0.20 to 0.30% nitrogen; 0.00 to 1.00% tungsten; the balance being iron and incidental impurities.

The present invention further provides for the use of the steel or welding consumable in a liquid petroleum gas (LPG) facility.

The present invention further provides a preferred method of heat treating a cast or forged or wrought product of a duplex stainless steel in the welded or unwelded condition, comprising: raising the temperature of the product to a first temperature between 1100 and 1150 deg C and holding at the first temperature; lowering the temperature of the product to a second temperature between 1040 and 1070 deg C and holding at the second temperature; and quenching the product in water from the second temperature. The casting or forging may be heat treated more conventionally just by raising the temperature of the casting to a first temperature between 1100 and 1150 deg C and holding at the first temperature. Both these two cycles also apply to welded castings.

The heat treatment associated with the present invention may be applied to the inventive steel and inventive welding consumable as well as other Super Duplex stainless steels. Control differs from the ASTM heat treatment in that it is 1120 Deg C holding to allow the casting to heat through (for about 1 hour per inch of maximum casting cross section) followed by dropping the temperature to 1050 Deg C and holding for a further time (e.g. 5 hours) followed by a water quench.

The adoption of this heat treatment process, or in the case of welding no post weld heat treatment at all, will still produce impact properties some 50 % better than normal with the enhanced chemistry, but the stepped heat treatment of the present invention further improves the impact properties of both the base metal/steel of the present invention and the weld made of the welding consumable of the present invention.

The duplex stainless steel of the present invention has high impact properties in castings in the heat treated state. An already heat treated casting may be welded with a filler or rod to the invention chemistry and not subjected to post weld heat treatment and still have excellent impact resistance in both the base cast metal and the weld metal. The superior impact resistance and corrosion resistance is thought to be the result of a lower volume fraction of sigma phase in the microstructure of the steel. Sigma phase is an intermetallic compound which can be present in duplex stainless steel in addition to the austenite and ferrite which make up the remainder of the microstructure along with carbides, nitrides etc.. The absence of substantial amounts of sigma phase also means that large castings do not crack on having their temperature raised and lowered during heat treatment. Previously even raising the temperature slowly of a Super Duplex large casting has resulted in cracking of the casting.

The present invention will now be described by way of non-limiting example with reference to the following drawings.
Figure 1 is a table of the range of composition for a ASTM A995-13 Gr 6A dated 1 December 2013 steel
Figure 2 is a table of compositions and impact strengths of examples of the invention and comparative examples;
Figure 3 is a table of compositions and impact strengths of examples of the invention;
Figure 4 is a table of a welding consumable composition example;
Figure 5 is a schematic illustration of the dimensions of a 200mm weld test plate;
Figure 6 is a table showing impact results for a weld made of the welding consumable in Figure 4;
Figure 7 is a bar graph showing the improvement in impact resistance of a welding consumable of the presention invention compared to conventional weld consumable in the as welded condition; and
Figure 8 is a bar graph showing the improvement in impact resistance of a welding consumable of the presention invention compared to conventional weld consumable in the post weld heat treated condition.

The present invention relates to a steel with a composition which falls within ASTM A995-13 Gr 6A, 1 December 2013 and which has a tighter composition to increase low temperature impact resistance particularly in thick sections and at high depths, whilst maintaining the other physical requirements of ASTM A995-13 Gr 6A, 1 December 2013 such as yield, UTS, elongation, and corrosion resistance. It is thought that the inventive steel also has improved corrosion resistance compared to other steels falling in ASTM A995-13 Gr 6A, 1 December 2013. Improved corrosion resistance is also achieved.

In the present invention, compared to ASTM A995-13 duplex Grade 6A, 1 December 2013 the silicon content is relatively limited and/or the nickel content is relatively raised as well as specific quantities of carbon and tungsten, combined with limiting the amounts of niobium and aluminium result in the improved properties, thought to be at least in part due to the reduction in the presence of sigma phase that is formed during quenching following the solution heat treatment at the nominal 1120 Deg C

The reasons for restricting the chemical composition of the duplex stainless steel of the present invention compared to ASTM A995-13 Gr 6A, 1 December 2013 will now be described. An explanation of the effect of additions which are not varied from the ASTM standard is omitted.

All percentages are weight percent unless otherwise indicated. The term "consisting of' is used herein to indicate that 100% of the composition is being referred to and the presence of additional components is excluded so that the percentages add up to 100%.

### Carbon (C)

Carbon is effective for stabilizing austenitic phases. A preferred amount is 0.005% or more. However, the amount of carbon is limited as its solubility in both ferrite and austenite is limited. Thereby limiting the carbon amount to 0.020%, namely 0.005 to 0.020, reduces the risk of precipitation of carbides, particularly chromium carbides. Experiments have shown that limiting the carbon even further results in even higher impact resistance. In the invention, carbon is limited to 0.015% or less, preferably 0.0145% or less. Particularly for welding consumables (e.g. electrodes) a lower level of carbon of 0.0145% or less is preferred.

### Silicon (Si)

Silicon is present as a deoxidizer. A minimum amount of silicon of 0.05% or more, preferably 0.1% or more achieves sufficient deoxidation. However, the presence of silicon can lead to precipitation of unwanted intermetallic phases, including sigma phase. Therefore, the amount of silicon is limited to 0.35 mass per cent but preferably to 0.30% and preferably to 0.25%. It has been found that for higher levels of silicon, its presence in castings can be mitigated to some extent by high nickel composition as shown by the examples described below. Preferably the amount of silicon is limited to 0.30% or even 0.25% thereby to reduce the chance of sigma phase precipitation. The best properties are achieved with a combination of low silicon content (0.35% or less or preferably 0.30% or less and preferably 0.25% or less) combined with high nickel content of 7.45 to 8.4% or preferably 7.5 to 8.4%, more preferably 7.8 to 8.4% and more preferably 8.05 to 8.4% and most preferably 8.1 to 8.4%. Nickel content of 7.45 to below 7.8% achieves high impact performance, but impact performance improves even further at 7.8% or more nickel.

### Nickel (Ni)

Nickel is an austenite stabilizing element. Experiments have shown that increased nickel content improves impact resistance. A minimum amount of nickel of 7.45% leads to high impact resistance in the case that the presence of silicon is limited to 0.35% or less. A minimum amount of 7.8 % nickel achieves high impact resistance even at relatively high levels of silicon of up to 0.45 %. However, best results are achieved, whatever the level of silicon, at levels of nickel of 7.45% to 8.4%, preferably 7.5% to 8.4% and more preferably 7.8 to 8.4% and even more preferably 8.05 to 8.4% and most preferably 8.10 to 8.4%.

### Niobium (Nb)

Niobium is not referenced in the ASTM A995-13, 1 December 2013 standard. However, Niobium is detrimental to impact properties by the formation of carbides and/or nitrides as discovered by the present inventors. Niobium has an high affinity for nitrogen and as such more specifically forms nitrides that combine with the nitrogen present in the steel as an intentional alloying element. Niobium is preferably present in an amount of 0.002% or more or 0.003% or more. However, the presence of niobium in amounts of greater than 0.017% can lead to a reduction in the impact strength of the steel as shown by the attached examples. Therefore, the amount of niobium is limited to 0.010% for best performance. A level of 0.010% or less niobium is very low compared to most steels manufactured, which normally have a level of at least 0.015% up to 0.03%, though the precise level is often not controlled or reported because of niobium's prevalence at these concentrations. The ASTM specifications do not place any limitation on the level of niobium. In order to achieve a low niobium concentration, argon oxygen decarburization (AOD) refining or induction melting of pure chrome and also the use of ARMCO is necessary. In AOD refining temperature and silicon concentration are controlled whilst oxygen is blown in order to remove niobium whilst not removing other elements. The advantage of using the AOD process is that scrap metal (e.g. stainless, plate etc) can be used to keep the cost of raw materials down. For induction melting scrap metal may not be used as scrap contains too much niobium and so expensive starting materials need to be purchased.

### Tungsten (W)

Tungsten improves corrosion resistance, particularly resistance to pitting and crevice corrosion. In the present invention the amount of tungsten is between 0.50 to 0.85% as experiments have shown that this provides the best range for good impact resistance at low temperatures. Preferably the amount of tungsten is 0.64 to 0.84% or 0.66 to 0.84%.

### Aluminium

Aluminium is not referenced in the ASTM A995-13, 1 December 2013 standard. However, the amount of aluminium should be limited in order to reduce the precipitation of aluminium nitride, the presence of which can result in a loss of corrosion resistance and toughness. Therefore, the amount of aluminium is limited to 0.015% or less, preferably 0.010% or less.

### Sulphur

A lower level of sulphur than allowed by the ASTM specification is preferred to avoid the formation of sulphides in the steel and so improve impact resistance. A level of sulphur of 0.010% or less is preferred.

### Cobalt

Cobalt is often present in source nickel as the two elements are found together. Cobalt behaves in a similar way to nickel and so can be present at 0.75% or less, preferably 0.60% or less, more preferably 0.50% or less and most preferably 0.20% or less.

Incidental impurities may be present, preferably up to a maximum of 0.20%. Vanadium can be seen as an incidental impurity. Preferably vanadium is present at a level of 0.10% or less.

The presence of sigma phase can deleteriously effect impact resistance. Therefore preferably the volume fraction sigma phase in the steel is less than 0.25%, preferably less than 0.1%, most preferably no detectable sigma phase as measured under any of the procedures in ASTM A923 2014, preferably ASTM A923-14 method C.

### Preferred Steel

A preferred steel includes or consists of, in mass %: 0.005 to 0.015% carbon; 0.05 to 0.35 (or preferably 0.30%) silicon, 7.45 to 8.4% nickel (preferably 7.8 to 8.4% nickel); 1.00% or less manganese; 0.025% or less sulphur; 0.030% or less phosphorous; 24.0 to 26.0% chromium; 0.50 to 1.00% copper; 3.0 to 4.0% molybdenum; 0.75% or less cobalt; 0.010% or less niobium;0.015% or less aluminium; 0.20 to 0.30% nitrogen and 0.50 to 0.85% tungsten; the balance being iron and incidental impurities. Even more preferably the preferred steel includes or comprises 0.25% or less silicon and/or 0.0145% or less carbon and/or 8.0% or more nickel and/or 8.05% or more nickel and/or 0.010% or less sulphur and/or 0.002% or more niobium and/or 0.003% or more niobium.

### Preferred welding consumable

A preferred welding consumable includes or consists of, in mass %: 0.015% or less carbon; 0.05 to 0.35 (or preferably 0.30%) silicon, 7.45 to 10.5% nickel (preferably 7.8 to 10.5% nickel); 2.00% or less manganese; 0.025% or less sulphur; 0.030% or less phosphorous; 24.0 to 27.0% chromium; 0.00 to 1.00% copper; 3.0 to 4.5% molybdenum; 0.75% or less cobalt; 0.010% or less niobium;0.015% or less aluminium; 0.20 to 0.30% nitrogen and 0.00 to 1.00% tungsten; the balance being iron and incidental impurities. Even more preferably the preferred welding consumable includes or comprises 0.25% or less silicon and/or 0.0145% or less carbon and/or 8.0% or more nickel and/or 8.05% or more nickel and/or 9.1% or more nickel and/or 9.3% or more nickel and/or 9.4% or more nickel and/or 0.010% or less sulphur and/or 0.002% or more niobium and/or 0.003% or more niobium.

### Example

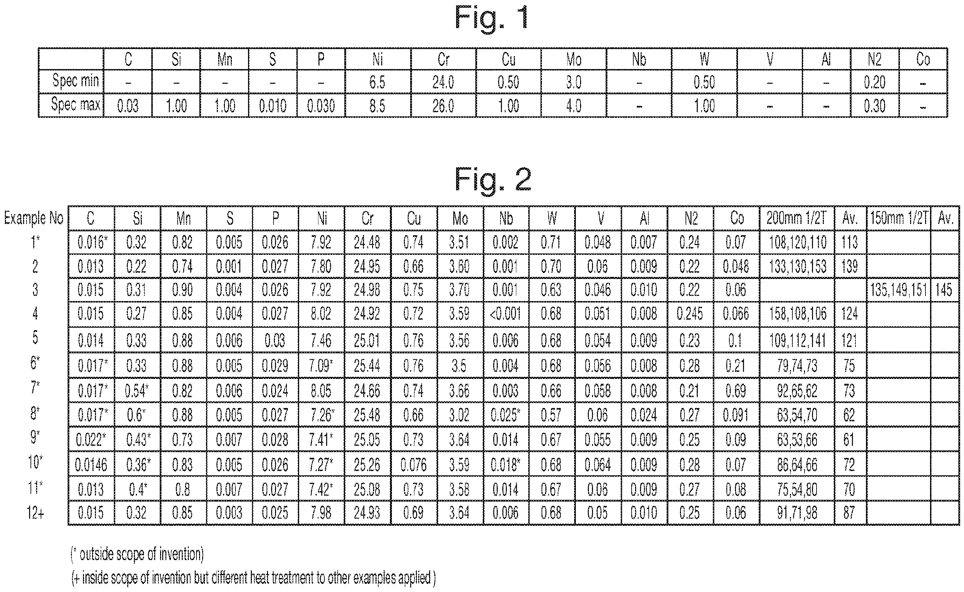

Super Duplex stainless steels having the chemical composition shown in Figure 2 were prepared. Castings of 200 mm thickness were prepared. These castings were heat treated at 1120°C where they were held for a time to allow through heating (e.g. 1 hour for every inch of thickness) before the temperature was dropped to 1050°C and held for five hours, followed by a water quench. In the case of example 3 the casting was 150 mm thick.

The heat treatment is designed such that all sigma phase dissolves in the austenite and ferrite phases at 1120°C. The temperature is then dropped to 1050°C, just above the solvus temperature of sigma, such that the maximum cooling rate can be achieved through out the thickness of the casting so as to avoid sigma and nitride precipitation as much as possible during cooling.

Charpy Impact tests were carried out using 10mm x 10mm x 55mm specimens to ASTM E23 Standard "Test methods for Notched Bar Impact Testing of Metallic Materials" revision 2012-C, at -46°C at half thickness and the results are given in figure 2.

As can be seen from figure 2, all of the examples in Table 1 have a composition falling within ASTM A995 Gr 6A, 1 December 2013. However, only those examples which are limited in carbon concentration to below 0.02%, in silicon concentration to 0.05-0.35% where the nickel concentration is between 7.10 and 8.4% or in silicon concentration to 0.05-0.45 % and a nickel concentration of 7.8 to 8.4%, have a niobium content of 0.017% or less, an aluminium content of 0.015% or less and a tungsten composition of 0. 50-0.85% achieve an average impact strength of above 120 Joules and a minimum of three tests of above 108 Joules. Vanadium is present as an incidental impurity. Cobalt is present less than 0.75%. Cobalt is present because is often present with nickel sources.

In the present invention an average impact strength (for a 200mm thick product) at ½ T is preferably at least 100 J and a minimum of three tests 80 J or more as measured by ASTM E23, 2012-C at -46°C.

Examples 2-4 are best performing in terms of impact strength and they have a silicon concentration of 0.05-0.35% as well as a nickel concentration of 7.8-8.4%. Examples 2 and 4 have best performance and fall within the most preferred composition with levels of carbon at or below 0.015% and silicon below 0.30% and at least 7.8% Ni. Example 5 has low carbon and silicon concentrations of 0.014% and 0.33% respectively and a reasonably high nickel concentration of 7.46%. This combination results in an impact strength of 121 Joules which is better than example 1, which has a higher carbon concentration.

Examples 6-11 fall compositionally outside the scope of the present invention and have impact resistances lower than 80 Joules. However even these examples exhibit increased impact resistance compared to the impact resistance achieved with 6A steels until now.

Example 6 has a low silicon concentration of 0.33%, but due to its low nickel concentration of 7.09% only has an impact strength of 75 Joules.

All of examples 8-11 include silicon and nickel in amounts falling outside the scope of the present invention and resulting in low impact strengths between 62 and 72 Joules.

Example 12 has a relatively low impact strength compared to examples 1-5 of 90 Joules. However example 12 was heat treated in a single step with a solution heat treatment at 1120 deg C for 10 hours followed by a water quench. This is thought to be the reason for the lower impact resistance compared with examples 1-5, though the impact resistance is better than that of examples 6-11 which fall outside the preferred composition but did have the two step heat treatment of the invention applied. The best performing examples of Figure 2 (examples 2-5 and 12) all have 0.015% or less carbon, 0.35% or less silicon, 0.010% or less niobium and 7.45% or more nickel.

Example 12 shows the improvement in impact resistance achieved by applying the two step heat treatment of the present invention and also shows that the steel composition of the present invention achieves benefits in impact resistance even with a conventional heat treatment.

Thus the method of heat treating of the present invention is a two stage heat treatment comprising raising the temperature of the casting to a first temperature where the sigma phase dissolves in the austenite and ferrite phases. The first temperature is in the range of 1100 to 1150 deg C. The casting is held at the first temperature for long enough for the casting to heat through such that the whole of the casting reaches the first temperature. As an example, the casting may be held at the first temperature for a minimum time in hours of the (maximum) thickness of the casting in inches divided by 2, preferably by 1 (i.e. one hour for each inch of thickness). The temperature of the casting is then reduced to a second temperature just above the solvus point of the sigma phase. The second temperature may be in the range of 1040 to 1070 deg C so long as it is above the sigma solvus temperature. The casting is held there long enough for the temperature to stabilize. As an example, the casting may be held at the second temperature for a minimum time in hours of the (maximum) thickness of the casting in inches divided by 4, preferably by 2 (i.e. half an hour for each inch of thickness). For example the casting is held there for 3 hours or more, for example for 5 hours. The time spent at each of the first and second temperatures is preferably limited to avoid excessive grain growth. The time spent at the first and second temperatures preferably does not exceed twice the maximum minimum amount of time specified above.

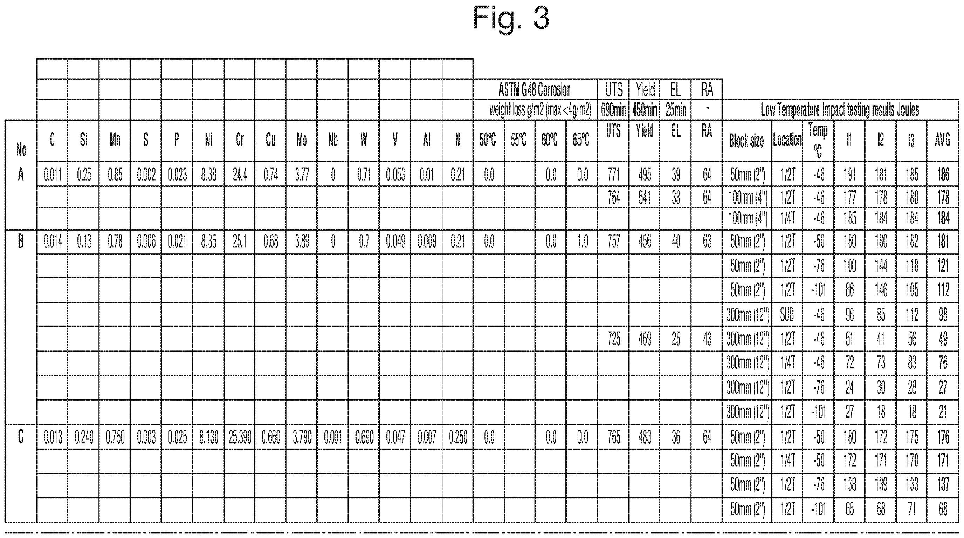

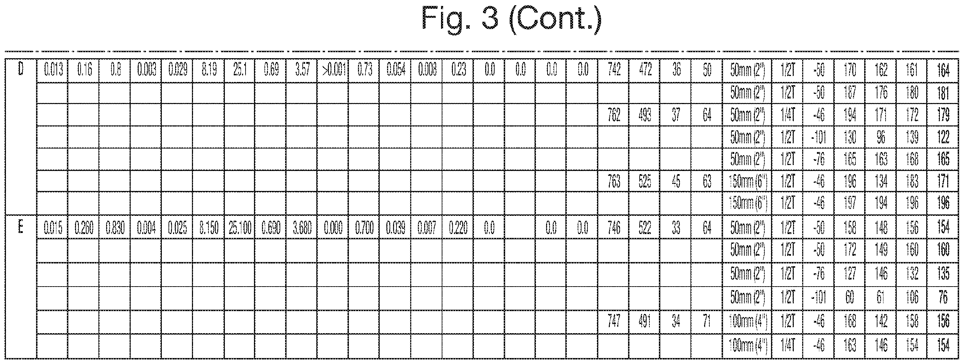

Figure 3 shows the results of further experiments which build on the results of Figure 2. Figure 3 includes results of corrosion tests, UTS and yield strengths as well as impact testing results for different casting sizes and at different temperatures. The way in which the castings were produced and tested are the same as explained with reference to examples 1-11 of Figure 2 except for the casting compositions, sizes and temperature of the impact tests which are detailed in Figure 3.

Example E has a composition close to that of example 4 and performs well in impact resistance at 50 and 100 mm 1/2T at all temperatures. Thus examples 2 and 4 and A-E show that limiting silicon to 0.30%, carbon to 0.015% and having at least 7.8% nickel with niobium below 0.010% results in very good impact properties. However, examples A, B, C and D, with even further limited carbon and silicon concentrations, perform even better in this regard without a loss in performance in the other areas tested.

Examples A-D show it is possible to achieve an average impact strength at 1/2T of 140J or more and a minimum of these tests of 105J or more as measured by ASTM E23, 2012-C at -46°C for section sizes of at least 50 mm and upto 150 mm (and expected at 200 mm). At -76°C averages of at least 90J and a minimum of 65J or more is achievable and at -101°C an average of at least 60J and a minimum of 45J can be achieved.

The corrosion results at 60°C compare with a weight loss of 8-65 g/m² in 24 hours measured for conventional 6A chemistry falling outside the present invention as reported in " Forging ahead with improvements in impact properties and corrosion resistance" S. Roberts, ASTM A995 Gr 6A demands a weight loss of less than 4 g/m² at 50°C, which is easily achieved by the present invention.

Large castings of Super Duplex stainless steel often require welding. This is either to join components (or parts of components) together or perhaps more commonly as weld repairs of casting defects. As described elsewhere, the impact resistance of welds at large thicknesses has not previously been investigated because the relevant ASTM standard does not require testing of welds at large thicknesses. Tests have shown that deep welds in 6A duplex using welding rods currently available achieve very low impact resistance at high depths (e.g. 25mm, 50 mm, 75mm and 98.5 mm) for a 100mm deep weld in a 200mm section thick casting. Often such welds have only achieved an impact resistance at such depths at -46 deg C of a few tens of Joules, and not consistently through out the depth and/or width of the weld.

The present inventors have found that by adopting the composition of the steel of the present invention in welding consumables when welding 6A steels, the impact resistances at high depths and across the width of the weld are vastly improved. In fact, it appears that even better impact properties of the weld can be achieved at higher nickel concentrations and lower carbon concentrations. This ensures a balance ferrite in the as welded condition. So the present invention allows for the welding consumable to have a composition of the steel of the present invention except for nickel content of up to 10.5% (preferably of up to 10.0%) and limit carbon to 0.015% or less, preferably 0.0145% or less carbon. In an embodiment the welding consumable has 8.05% or more nickel, preferably 8.1% or more nickel, more preferably 9.1% or more nickel, still more preferably 9.3% or more nickel and most preferably 9.4% or more nickel. Increasing nickel concentrations are thought further to minimise sigma formation. In an embodiment compared to the base metal the amount of manganese may be increased to up to 2.00% as this can improve weldability. Reduced amounts of copper and tungsten are allowed in an embodiment compared to the base metal (0.00 to 1.00% and 0.00 to 1.00% respectively) to take into account 2507 type weld consumables which are not alloyed with either element. Compared to the base metal more chromium (24.0 to 27.0%) and/or more molybdenum (3.0 to 4.5%) are allowed in an embodiment to allow for composition balance adjustments in the weld metal spec.

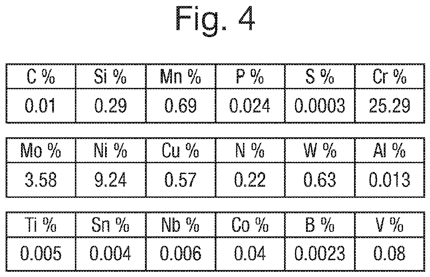

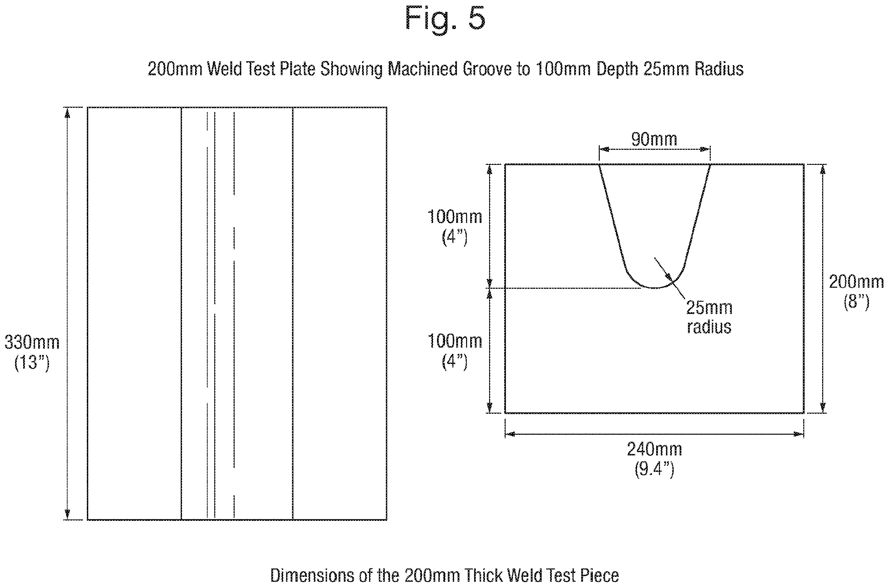

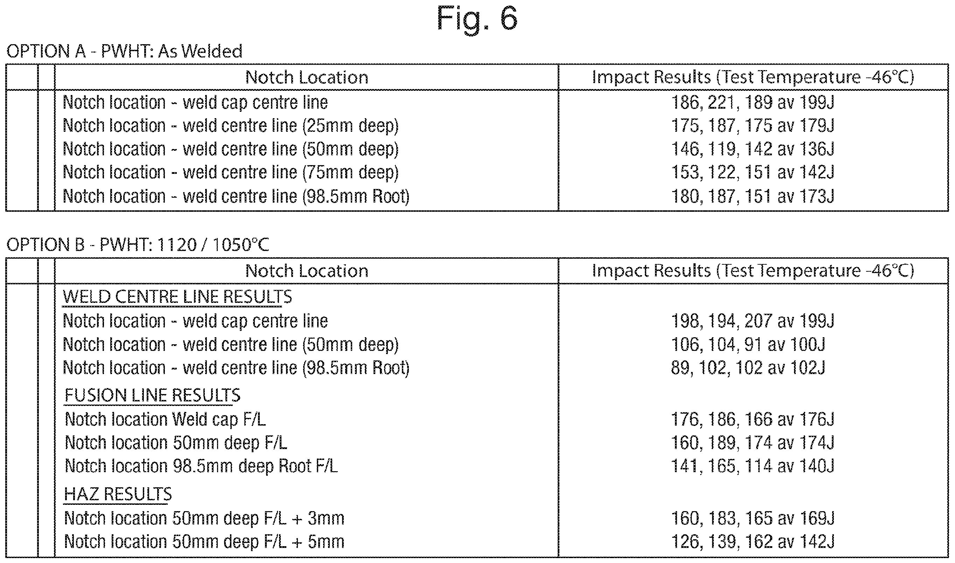

Figure 4 shows the composition of an example welding consumable. The welding consumable was used to fill a 100mm deep groove in a 200mm test plate whose dimensions are shown in Figure 5. Figure 6 shows the results of impact tests carried out at various depths through the weld metal, both in the as-welded condition (top) and in the post weld heat treated condition (the same conditions as applied to the castings described above, namely 1120 deg C followed by 1050 deg C and then a water quench). As the results show, the welding consumable of the present invention results in very high impact resistances in the as-welded condition and more than acceptable, though slightly lower, impact resistances in the heat treated condition.

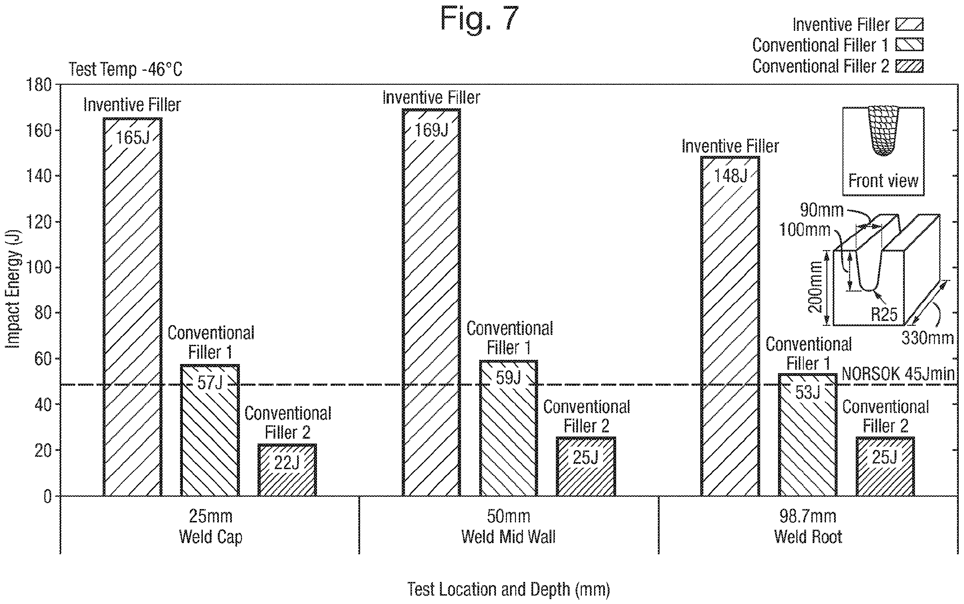

Figure 7 is a bar chart showing the as welded impact energy in J on the y axis at -46°C for a 100 mm deep weld which is 90 mm in width in a 200 mm x 330 mm elongate block at different depths (25 mm, 50 mm and 98.7 mm) at the weld centre for a weld consumable (filler) according to the present invention (best results), a conventional weld consumable over alloyed with nickel (middle results) and a conventional weld consumable with a composition falling within the ASTM specification (worst results). The compositions of the two conventional fillers are as follows:

| | **C** | **Si** | **Mn** | **S** | **P** | **Ni** | **Cr** | **Cu** | **W** | **Mo** | **N** |
|---|---|---|---|---|---|---|---|---|---|---|---|
| Over Alloyed Ni Filler | 0.03 | 0.69 | 1.07 | 0.005 | 0.017 | 9.6 | 24.6 | 0.10 | 0.03 | 3.5 | 0.22 |
| 6A Matching Filler (Cu) | 0.025 | 0.61 | 1.01 | 0.015 | 0.019 | 7.8 | 24.6 | 0.65 | 0.71 | 3.6 | 0.27 |

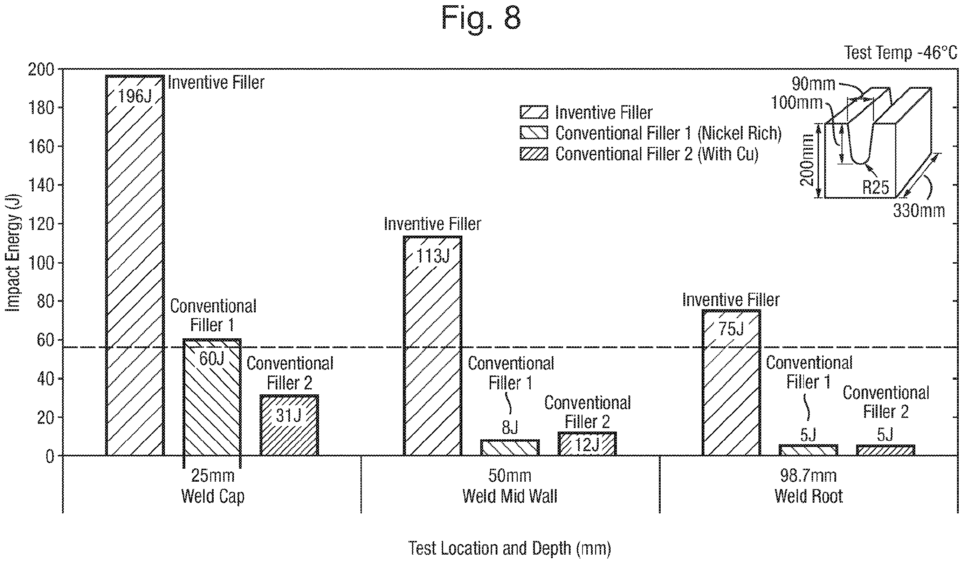

Figure 8 is the same as Figure 7 except that the samples are in the post weld heat treated condition, namely solution treatment of 1120°C for 1 hour per inch thickness, followed by 1050°C until equalised, followed by a water quench. The results in Figures 7 and 8 show the improvement in impact resistance of the present invention over conventional weld consumables.

### Aspects

1. A steel including, in mass %: 0.005 to 0.015% carbon; 0.05 to 0.35% silicon, 7.45 to 8.4% nickel; 1.00% or less manganese; 0.025% or less sulphur; 0.030% or less phosphorous; 24.0 to 26.0% chromium; 0.50 to 1.00% copper; 3.0 to 4.0% molybdenum; 0.010% or less niobium; 0.75% or less cobalt; 0.015% or less aluminium; 0.20 to 0.30% nitrogen; 0.50 to 0.85% tungsten; the balance being iron and incidental impurities.
2. The steel of aspect 1, including 7.5% or more nickel, preferably 7.8% or more nickel, most preferably 8.00% or more nickel.
3. The steel of aspect 1, including 8.05% or more nickel.
4. The steel of any of aspects 1-3, including 8.1% or more nickel.
5. The steel of any of the preceding aspects, including 0.005 to 0.0145% carbon.
6. The steel of any of the preceding aspects, including 0.05 to 0.30% silicon, preferably 0.05 to 0.25% silicon, most preferably 0.10 to 0.25% silicon.
7. The steel of any one of aspects 1-6, including 0.002% or more niobium.
8. The steel of any one of aspects 1-7, including 0.003% or more niobium.
9. The steel of any of aspects 1-8, including 0.010% or less sulphur.
10. The steel of any one of aspects 1-9, including 0.64 to 0.84% tungsten, preferably 0.66% to 0.84% tungsten.
11. The steel of any one of aspects 1-10, including 0.010% or less aluminium.
12. The steel of any of aspects 1-11, wherein a volume fraction of sigma phase in the steel is less than 0.25%, preferably less than 0.1%, most preferably no detectable sigma phase as measured under ASTM A923 2014.
13. The steel of any of aspects 1-12, wherein the steel is a steel in accordance with ASTM A995-13 Gr 6A, 1 December 2013.
14. The steel of any of aspects 1-13, wherein an average impact strength at ½ T is 100 J or more and a minimum of three tests of 80 J or more as measured by ASTM E23, 2012-C at -46°C.
15. The steel of any of aspects 1-14, wherein an average impact strength at ½ T is 140 J or more and a minimum of three tests of 105 J or more as measured by ASTM E23, 2012-C at -46°C.
16. A cast, forged or wrought product formed of a steel according to any of aspects 1-15.
17. A welding consumable including, in mass %: 0.015% or less carbon; 0.05 to 0.35% silicon, 7.45 to 10.5% nickel; 2.00% or less manganese; 0.025% or less sulphur; 0.030% or less phosphorous; 24.0 to 27.0% chromium; 0.00 to 1.00% copper; 3.0 to 4.5% molybdenum; 0.75% or less cobalt; 0.010% or less niobium; 0.015% or less aluminium; 0.20 to 0.30% nitrogen; 0.00 to 1.00% tungsten; the balance being iron and incidental impurities.
18. The welding consumable of aspect 17, including 1.00% or less manganese and/or 24.0 to 26.0% chromium.
19. The welding consumable of aspect 17 or 18, including 10.0% nickel or less;.
20. The welding consumable of aspect 17 or 18, including 0.50 to 1.00% copper.
21. The welding consumable of aspect 17 or 18, including 3.0 to 4.0% molybdenum; and 0.50 to 0.85% tungsten.
22. The welding consumable of any of aspects 17 to 21, including 7.8% or more nickel, preferably 8.05% or more nickel, more preferably 8.1% or more nickel, still more preferably 9.1% or more nickel, still more preferably 9.3% or more nickel and most preferably 9.4% or more nickel.
23. The welding consumable of any of aspects 17-22, including 0.01 to 0.015% carbon, preferably 0.005 to 0.0145% carbon.
24. The welding consumable of any of aspects 17-23, including 0.05 to 0.30% silicon, preferably 0.10 to 0.25% silicon.
25. The welding consumable of any of aspects 17-24, including 0.002% or more niobium.
26. The welding consumable of any of aspects 17-25, including 0.003% or more niobium.
27. The welding consumable of any of aspects 17-26, including 0.010% or less sulphur.
28. The welding consumable of any of aspects 17-27, including 0.64 to 0.84% tungsten, preferably 0.66% to 0.84% tungsten.
29. The welding consumable of any of aspects 17-28, including 0.010% or less aluminium.
30. The welding consumable of any one of aspects 17-29, wherein the welding consumable is a filler weld metal or a welding electrode.
31. A method of welding a base steel using the welding consumable of any one of aspects 17-30.
32. The method of welding of aspect 31, wherein the base steel is in accordance with ASTM A995-13 Gr 6A, 1 December 2013.
33. The method of welding of aspect 31 or 32, wherein the base steel is a steel according to any of claims 1-15.
34. The method of welding of any of aspects 31-33, wherein the method is a method of forming a product according to claim 16.
35. A welded product comprising a base metal and a weld metal wherein the base metal is a duplex steel and the weld metal includes, in mass %: 0.015 % or less carbon; 0.05 to 0.35% silicon, 7.45 to 10.5% nickel; 2.00% or less manganese; 0.025% or less sulphur; 0.030% or less phosphorous; 24.0 to 27.0% chromium; 0.00 to 1.00% copper; 3.0 to 4.5% molybdenum; 0.75% or less cobalt; 0.010% or less niobium; 0.015% or less aluminium; 0.20 to 0.30% nitrogen; 0.00 to 1.00% tungsten; the balance being iron and incidental impurities.
36. The welding product of aspect 35, including 10.0% nickel or less; 1.00% or less manganese; 24.0 to 26.0% chromium; 0.50 to 1.00% copper; 3.0 to 4.0% molybdenum; and 0.50 to 0.85% tungsten.
37. The welded product of aspect 35 or 36, wherein the duplex steel is in accordance with ASTM A995-13 type Gr 6A, 1 December 2013.
38. The welded product of aspect 35, 36 or 37, wherein the duplex steel is a steel according to any of claims 1-15.
39. A method of heat treating a cast or forged or wrought of a duplex stainless steel in the welded or unwelded condition, comprising: raising the temperature of the product to a first temperature between 1100 and 1150 deg C and holding at the first temperature; lowering the temperature of the product to a second temperature between 1040 and 1070 deg C and holding at the second temperature; and quenching the product in water from the second temperature.
40. The method of aspect 39, wherein the product is held at the first temperature for a time in hours of greater than the thickness of the product measured in inches divided by 2.
41. The method of aspect 39 or 40, wherein the product is held at second temperature for a time in hours of greater than the thickness of the product measured in inches divided by 4.
42. The method of aspect 39, 40 or 41 wherein the duplex steel is in accordance with ASTM A995-13 Gr 6A, 1 December 2013.
43. The method of any of aspects 39 to 42, wherein the duplex steel is a steel according to any of claims 1-15.
44. A steel, cast, forged or wrought product, welding consumable or welded product substantially as herein before described with reference to and/or as illustrated in the accompanying drawings.
45. A method of welding or a method of heat treating substantially as herein before described with reference to and/or as illustrated in the accompanying drawings.

## Claims

1. A welding consumable including, in mass %: 0.015% or less carbon; 0.05 to 0.35% silicon, 7.45 to 10.5% nickel; 2.00% or less manganese; 0.025% or less sulphur; 0.030% or less phosphorous; 24.0 to 27.0% chromium; 0.00 to 1.00% copper; 3.0 to 4.5% molybdenum; 0.75% or less cobalt; 0.010% or less niobium; 0.015% or less aluminium; 0.20 to 0.30% nitrogen; 0.00 to 1.00% tungsten; the balance being iron and incidental impurities.

2. The welding consumable of claim 1, including 1.00% or less manganese and/or 24.0 to 26.0% chromium.

3. The welding consumable of claim 1 or 2, including 10.0% nickel or less and/or including 0.50 to 1.00% copper.

4. The welding consumable of claim 1 or 2 or 3, including 3.0 to 4.0% molybdenum; and 0.50 to 0.85% tungsten.

5. The welding consumable of any of claims 1 to 4, including 7.8% or more nickel, preferably 8.05% or more nickel, more preferably 8.1% or more nickel, still more preferably 9.1% or more nickel, still more preferably 9.3% or more nickel and most preferably 9.4% or more nickel.

6. The welding consumable of any of claims 1-5, including 0.01 to 0.015% carbon, preferably 0.005 to 0.0145% carbon and/or including 0.05 to 0.30% silicon, preferably 0.10 to 0.25% silicon.

7. The welding consumable of any of claims 1-6, including 0.002% or more niobium and/or including 0.003% or more niobium.

8. The welding consumable of any of claims 1-7, including 0.010% or less sulphur.

9. The welding consumable of any of claims 1-8, including 0.64 to 0.84% tungsten, preferably 0.66% to 0.84% tungsten.

10. The welding consumable of any of claims 1-9, including 0.010% or less aluminium.

11. The welding consumable of any one of claims 1-10, wherein the welding consumable is a filler weld metal or a welding electrode.

12. A method of welding a base steel using the welding consumable of any one of claims 1-11.

13. The method of welding of claim 12, wherein the base steel is in accordance with ASTM A995-13 Gr 6A, 1 December 2013.

14. A welded product comprising a base metal and a weld metal wherein the base metal is a duplex steel and the weld metal includes, in mass %: 0.015 % or less carbon; 0.05 to 0.35% silicon, 7.45 to 10.5% nickel; 2.00% or less manganese; 0.025% or less sulphur; 0.030% or less phosphorous; 24.0 to 27.0% chromium; 0.00 to 1.00% copper; 3.0 to 4.5% molybdenum; 0.75% or less cobalt; 0.010% or less niobium; 0.015% or less aluminium; 0.20 to 0.30% nitrogen; 0.00 to 1.00% tungsten; the balance being iron and incidental impurities.

15. The welded product of claim 14, including 10.0% nickel or less; 1.00% or less manganese; 24.0 to 26.0% chromium; 0.50 to 1.00% copper; 3.0 to 4.0% molybdenum; and 0.50 to 0.85% tungsten and/or wherein the duplex steel is in accordance with ASTM A995-13 type Gr 6A, 1 December 2013.
